# EUROPÄISCHE PATENTANMELDUNG

(11) **EP 2 033 757 A1**
(43) Veröffentlichungstag der Anmeldung: **11.03.2009**
(21) Anmeldenummer: 08163734.0
(22) Anmeldetag: 05.09.2008
(51) Int. Cl.: B29C 33/38

(54) **Verfahren zur und Formwerkzeug für die Herstellung von Bauteilen, insbesondere aus Faserverbundwerkstoffen**

(30) Priorität: 07.09.2007 DE 102007042513
(71) Anmelder: Deutsches Zentrum für Luft- und Raumfahrt e.V., 51147 Köln (DE)
(72) Erfinder: Friedrich, Martin, 30161 Hannover (DE); Podkorytov, Maksim, 38106 Braunschweig (DE)
(74) Vertreter: Rehberg Hüppe + Partner

(57) **Zusammenfassung**

Zur Herstellung von Bauteilen, insbesondere von Bauteilen aus Faserverbundwerkstoffen, wird zunächst eine Urform (1) mit einer Gießmasse aus ultrahochfestem Beton (UHPC) (3) vergossen, um mit dem Aushärten des UHPC (3) ein mehrfach verwendbares Formwerkzeug für die Bauteile zu erhalten.

## Beschreibung

### TECHNISCHES GEBIET DER ERFINDUNG

Die Erfindung bezieht sich auf ein Verfahren zur Herstellung von Bauteilen, insbesondere von Bauteilen aus Faserverbundwerkstoffen, mit den Merkmalen des Oberbegriffs des unabhängigen Patentanspruchs 1. Weiterhin bezieht sich die Erfindung auf ein Formwerkzeug für die Herstellung von Bauteilen, insbesondere von Bauteilen aus Faserverbundwerkstoffen, mit dem Merkmal des Obergriffs des Patentanspruchs 7.

Wenn in dieser Beschreibung von einem Formwerkzeug die Rede ist, kann es sich sowohl um ein Formwerkzeug, das als Formschale eine äußere Form des herzustellenden Bauteils vorgibt, als auch um ein Formwerkzeug handeln, das als Formkern eine innere Form des herzustellenden Bauteils vorgibt.

### STAND DER TECHNIK

Die Herstellung vieler hochwertiger Bauteile erfolgt unter Verwendung von Formwerkzeugen, die die Form der Bauteile vorgeben. Ihrerseits weisen diese Formwerkzeuge einen Negativabdruck der gewünschten Form der Bauteile auf.

Zum Beispiel bei der Herstellung von Bauteilen aus Faserverbundwerkstoffen, aber auch bei der Herstellung anderer hochwertiger Bauteile, stellt sich eine Vielzahl von Anforderungen an ein Formwerkzeug. Hierzu gehören gute Temperaturbeständigkeit, geringe Wärmeausdehnung, hohe Abriebfestigkeit, gute Gasdichtheit, kleine Fertigungstoleranzen, Realisierbarkeit in großen Abmessungen sowie kostengünstige Herstellbarkeit und schnelle Verfügbarkeit. Diese Anforderungen werden durch ein einziges Formwerkzeug bislang nicht erfüllt.

Das Standardverfahren zur Herstellung hochwertiger Formwerkzeuge für die Herstellung von Faserverbundwerkstoffen ist die spanende Bearbeitung eines Halbzeugs mit anschließendem manuell ausgeführtem Oberflächenfinish. Als Material des Halbzeugs kommen dabei verschiedene Metalle, zum Beispiel Stähle, Aluminiumlegierungen und Nickelwerkstoffe, zum Einsatz. Hauptnachteil dieses Verfahrens sind die hohen Kosten. Bei Legierungen, die eine vergleichsweise schnelle spanende Bearbeitung zulassen, ist die Abriebfestigkeit der Oberfläche des Formwerkzeugs nur gering.

Bei einem anderen bekannten Verfahren zur Herstellung eines Formwerkzeugs wird dieses aus keramischen Materialien gesintert. Hauptnachteile dieses Verfahrens sind die begrenzte Größe der derart herstellbarer Formwerkzeuge, die aufgrund von Schrumpf auftretenden Fertigungstoleranzen und die nach dem Sintern einen erheblichen Nachbearbeitungsaufwand erfordernden Oberflächen.

Als Verfahren mit den Merkmalen des Oberbegriffs des unabhängigen Patentanspruchs 1 ist es bekannt, Formwerkzeuge durch Verguss von Urformen mit Kunststoffgießmasse herzustellen. Die Temperaturbeständigkeit der dabei aus der Kohlenstoffmasse erhaltenen Formwerkzeuge ist jedoch nur schlecht.

Als weiteres Verfahren mit den Merkmalen des Oberbegriffs des unabhängigen Patentanspruchs 1 ist der Verguss von Urformen mit über deren Schmelzpunkt erhitzter metallischer Gießmasse bekannt. Dieses Verfahren ist kostenintensiv und führt zu schlechten Oberflächen der erhaltenen Formwerkzeuge.

Noch ein Verfahren mit den Merkmalen des Oberbegriffs des unabhängigen Patentanspruchs 1 ist in der DE 43 05 196 A1 offenbart. Hier wird eine Spritzgussform für Kunststoffteile durch Vergießen eines gießfähigen aushärtbarem Materials in eine Werkzeug-Negativform hergestellt. Als gießfähiges aushärtbares Material für die Spritzgussform wird Metall oder eine Metalllegierung oder alternativ Mineralguss verwendet. Bei Mineralguss handelt es sich um einen Werkstoff, der aus mineralischen Füllstoffen und einem geringen Anteil Epoxidbinder besteht und auch als Polymerbeton oder Reaktionsharzbeton bezeichnet wird. Gussteile aus Mineralbeton sind für Betriebstemperaturen über 80°C nicht geeignet. Als Werkzeug-Negativform kann gemäß der DE 43 05 196 A1 eine Gipsgussform oder eine Gipsvakuumgussform oder alternativ eine solche aus Mineralguss oder Zement verwendet werden. Gips und Zement sind nicht vakuumdicht und für die Herstellung der eigentlichen Spritzgussform nicht ausreichend standfest.

Noch ein Verfahren mit den Merkmalen des Oberbegriffs des unabhängigen Patentanspruchs 1 ist aus der EP 0 171 700 B1 bekannt. Hier wird eine Form zur Herstellung großer und insbesondere langer Formteile aus Faserverbundmaterial auf einem Untergestell aus Beton ausgebildet, auf dem ein ebenfalls aus Beton bestehender Körper angeordnet wird, der mit einem Abdruck des zu formenden Teils versehen ist. Hierauf werden eine elektrische Widerstandsheizeinrichtung und eine dünne Blechauflage aufgebracht, die sich über den gesamten Abdruck erstreckt. Der Körper aus Beton mit dem Abdruck des zu formenden Teils besteht aus thermisch isolierendem Leichtbeton, der einen Füllstoff aus geschlossenzelligen Glaskugeln und Mikrokugeln mit einer geringen Dichte enthält. Die aus der EP 0 141 700 B1 bekannte, insgesamt 4-lagige Form ist von komplexem Aufbau und in ihrer Herstellung sehr aufwändig.

In jüngerer Zeit werden auch Verfahren aus dem Bereich des Rapid-Prototyping, wie zum Beispiel Stereolithographie oder EBM basierend auf Kunststoff oder auch auf metallischem Ausgangsmaterial zur Herstellung von Formwerkzeugen eingesetzt. Diese Verfahren sind sehr kostspielig. Dies gilt insbesondere bei Verwendung von metallischem Ausgangsmaterial. Demgegenüber sind aus Kunststoff ausgebildete Formwerkzeugen von geringer Temperaturbeständigkeit. In jedem Fall ist die Größe herstellbarer Formwerkzeugen begrenzt.

### AUFGABE DER ERFINDUNG

Der Erfindung liegt die Aufgabe zugrunde, ein Verfahren mit den Merkmalen des Oberbegriffs des unabhängigen Patentanspruchs 1, das zu einem Formwerkzeug führt, das alle eingangs geschilderten Anforderungen erfüllt, sowie eine entsprechendes Formwerkzeug mit den Merkmalen des Oberbegriffs des unabhängigen Patentanspruchs 7 aufzuzeigen.

### LÖSUNG

Erfindungsgemäß wird diese Aufgabe durch ein Verfahren mit den Merkmalen des unabhängigen Patentanspruchs 1 und ein Formwerkzeug mit den Merkmalen des unabhängigen Patentanspruchs 7 erfüllt. Vorteilhafte Ausführungsformen des neuen Verfahrens sind in den abhängigen Patentansprüchen 2 bis 6 beschrieben. Die abhängigen Patentansprüche 8 bis 12 betreffen vorteilhafte Ausführungsformen des neuen Formwerkzeugs.

### BESCHREIBUNG DER ERFINDUNG

Bei dem neuen Verfahren zur Herstellung von Bauteilen, insbesondere von Bauteilen aus Faserverbundwerkstoffen, wird eine Urform mit einer Gießmasse aus ultrahochfestem Beton vergossen, um mit dem Aushärten des Betons ein mehrfach verwendbares Formwerkzeug für die Bauteile zu erhalten.

Die Bezeichnung "ultrahochfester Beton", die im deutschen mit UHFB abgekürzt wird, die im englischen "Ultra High Performance Concrete" lautet und daher gleichbedeutend mit der Abkürzung UHPC ist, steht für eine neuartige Betonsorte, deren Einsatz im Bauwesen bekannt ist. Die technologische Besonderheit von UHPC ist eine extrem hohe Gefügedichte, die fast keine Poren und Mikrorisse aufweist. Der Kapillarporenanteil kann bei UHPC unter 2 Vol.-% gehalten werden, während normaler Beton einen Kapillarporenanteil von etwa 15 Vol.-% aufweist. Eine Übersicht über die Eigenschaften und Parameter von UHPC gibt T. Rümmelin: "Entwicklung, Bemessung, Konstruktion und Anwendung von ultrahochfesten Betonen", Diplomarbeit Fachhochschule Stuttgart - Hochschule für Technik, Stuttgart 2005.

Die bislang nur im Bauwesen genutzten Eigenschaften von UHPC erlauben das Herstellen von Formwerkzeugen für die Herstellung von hochwertigen Bauteilen durch einfachen Verguss von Urformen. Dabei wird bei entsprechender Qualität der Oberfläche der Urform eine gegossene Oberfläche des Formwerkzeugs erreicht, die nicht nachbearbeitet werden muss. Vielmehr ist die gegossene Oberfläche des Formwerkzeugs aus UHPC glasartig glatt und sehr abriebfest. Zudem ist UHPC, soweit dies für die Herstellung von Bauteilen aus Faserverbundwerkstoffen selbst durch Vakuuminjektionsverfahren erforderlich ist, gasdicht und auch bei thermischer Belastung, sowohl aufgrund hoher als auch aufgrund wechselnder Temperaturen, formstabil.

Bei dem neuen Verfahren können dem UHPC Verstärkungsfasern zugeschlagen werden. Dies kann sinnvoll sein, wenn beispielsweise ein sehr großflächiges und gleichzeitig dünnes Formwerkzeug hergestellt werden soll. Der Zuschlag von Verstärkungsfasern zu dem UHPC ist bei dem neuen Verfahren jedoch nicht zwingend.

Wenn Verstärkungsfasern dem UHPC zugeschlagen werden, kann es sich insbesondere um metallische Verstärkungsfasern oder Glasfasern handeln. Grundsätzlich ist aber auch der Zuschlag von anderen Verstärkungsfasern, wie beispielsweise aus Kohlenstoff oder Kunststoff, möglich, wie sie bei UHPC generell zum Einsatz kommen können.

Wenn zur Herstellung von Bauteilen aus Faserverbundwerkstoffen ein Faserhalbzeug auf das Formwerkzeug aufgebracht oder in dieses eingebracht wird, kann bei einem Formwerkzeug aus UHPC der Bereich des Faserhalbzeugs unter Verwendung des Formwerkzeugs selbst abgedichtet und anschließend evakuiert werden. Das heißt, das Formwerkzeug ist dann Teil der Umschließung der das Faserhalbzeug aufnehmenden Vakuumblase. Dies ist aufgrund der hohen Gasdichtigkeit von UHPC möglich.

Für ein Formwerkzeug aus UHPC ist es unkritisch, wenn es zum Aushärten der Bauteile erhitzt wird. Hier machen sich vielmehr die hohe Temperaturbeständigkeit von UHPC und auch der geringe Wärmeausdehnungskoeffizient von UHPC positiv bemerkbar.

Das erfindungsgemäße gegossene Formwerkzeug für die Herstellung von Bauteilen, insbesondere von Bauteilen aus Faserverbundwerkstoffen, aus UHPC zeichnet sich neben seinem günstigen Preis durch eine außerordentliche Qualität aus, zu der neben den bereits im Zusammenhang mit dem erfindungsgemäßen Verfahren erläuterten Vorteilen insbesondere die kleinen Fertigungstoleranzen gepaart mit hoher Formstabilität zählen. So können trotz des vergleichsweise schweren Materials immer noch vernünftig handhabbare, groß dimensionierte Formwerkzeuge bereitgestellt werden. Konkret besteht gegenüber Formwerkzeugen aus metallischen Materialien der Stahlgewichtsklasse kein relevanter Gewichtsnachteil der neuen gegossenen Formwerkzeuge.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wir im Folgenden anhand eines konkreten Ausführungsbeispiels unter Bezugnahme auf die beigefügten Zeichnungen erläutert und beschrieben.
- **Fig. 1**: zeigt das Vergießen einer Urform mit einer Vergussmasse aus UHPC innerhalb einer äußeren Form; und
- **Fig. 2**: zeigt das aus dem Vergießen gemäß Fig. 1 resultierende Formwerkzeug aus UHPC.

### FIGURENBESCHREIBUNG

Zur Herstellung eines Formwerkzeugs für die Herstellung von Bauteilen, insbesondere von Bauteilen aus Faserverbundwerkstoffen, wird zunächst eine der Form der gewünschten Bauteile entsprechende Urform 1 hergestellt. Bei der Urform 1 kann es sich auch um ein Muster des herzustellenden Bauteils oder einen Teil eines solchen Musters handeln. Die Urform 1 kann aber auch beispielsweise durch Fräsen oder dergleichen hergestellt werden. Je nach ihrer konkreten Form kann sie als verlorene Urform oder zur mehrfachen Verwendung, das heißt zur Herstellung mehrerer Formwerkzeuge vorgesehen sein. Die Urform 1 wird hier flach am Grund einer äußeren Form 2 angeordnet, die anschließend mit UHPC 3 in flüssigem Zustand 4 ausgegossen wird. Die Zusammensetzung des UHPC kann die eines im Bauwesen kommerziell erhältlichen UHPC sein. Der in die äußere Form 2 eingebrachte UHPC kann um die Urform 1 herum mit üblichen Techniken, wie beispielsweise Vibration, verdichtet und von Gasanteilen befreit werden. Danach wird der UHPC 3 in der äußeren Form 2 ausgehärtet, wobei es sich um einen Vorgang handelt, der aufgrund der Zusammensetzung des UHPC 3 regelmäßig ohne äußere Anregung abläuft. Nach dem Aushärten des UHPC 3 wird dieser in festem Zustand 5 aus der äußeren Form 2 entformt, und die Urform 1 wird entfernt.

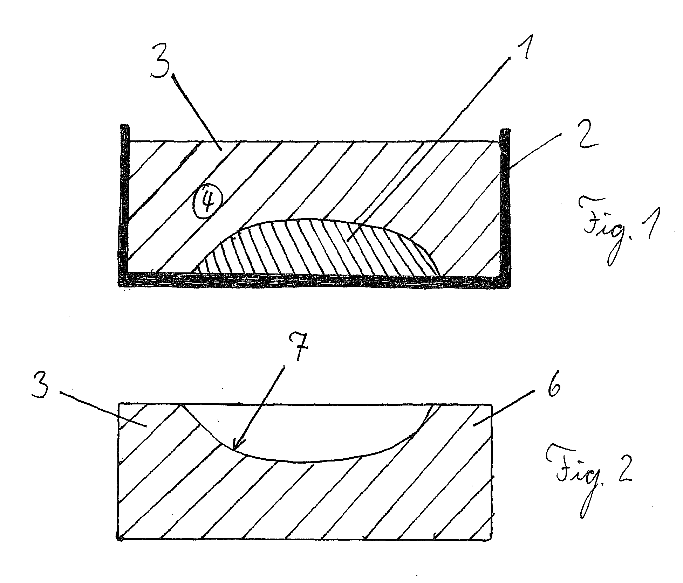

Hieraus resultiert unmittelbar und ohne weitere Nachbearbeitung das Formwerkzeug 6, das in **Fig. 2** gezeigt ist. Dessen an die Urform 1 gegossene Oberfläche 7 ist glasartig glatt und hart und bedarf keiner weiteren Nachbearbeitung. Vielmehr kann das Formwerkzeug 6 unmittelbar zur Herstellung von hochwertigen Bauteilen verwendet werden, wobei es aufgrund ihrer Gasdichtigkeit Teil einer ein Bauteil umschließenden Vakuumblase sein kann und aufgrund seiner thermischen Stabilität gegenüber einem Temperaturwechsel wiederholt auf eine Aushärtetemperatur für das Bauteil gebracht werden kann, so dass mit ihm sehr viele einzelne Bauteile hergestellt werden können.

### BEZUGSZEICHENLISTE

- 1: Urform
- 2: äußere Form
- 3: UHPC
- 4: flüssiger Zustand
- 5: fester Zustand
- 6: Formwerkzeug
- 7: Oberfläche

## Patentansprüche

1. Verfahren zur Herstellung von Bauteilen, insbesondere von Bauteilen aus Faserverbundwerkstoffen, wobei eine Urform mit einer Gießmasse vergossen wird, um mit dem Aushärten der Gießmasse ein mehrfach verwendbares Formwerkzeug für die Bauteile zu erhalten, **dadurch gekennzeichnet, dass** als Gießmasse ultrahochfester Beton (UHPC) (3) verwendet wird.

2. Verfahren nach Anspruch 1, **dadurch gekennzeichnet, dass** die gegossene Oberfläche (7) des Formwerkzeugs (6) nicht nachbearbeitet wird.

3. Verfahren nach einem der Ansprüche 1 und 2, **dadurch gekennzeichnet, dass** dem UHPC (3) Verstärkungsfasern zugeschlagen werden.

4. Verfahren nach Anspruch 3, **dadurch gekennzeichnet, dass** dem UHPC (3) metallische Verstärkungsfasern oder Glasfasern zugeschlagen werden.

5. Verfahren nach einem der Ansprüche 1 bis 4, **dadurch gekennzeichnet, dass** ein Faserhalbzeug in das Formwerkzeug (6) aufgebracht oder in dieses eingebracht wird und dass der Bereich des Faserhalbzeugs unter Verwendung des Formwerkzeugs (6) abgedichtet und anschließend evakuiert wird.

6. Verfahren nach einem der Ansprüche 1 bis 5, **dadurch gekennzeichnet, dass** das Formwerkzeug (6) zum Aushärten der Bauteile erhitzt wird.

7. Gegossenes Formwerkzeug für die Herstellung von Bauteilen, insbesondere von Bauteilen aus Faserverbundwerkstoffen, **dadurch gekennzeichnet, dass** das Formwerkzeug (6) aus UHPC (3) besteht.

8. Formwerkzeug nach Anspruch 7, **dadurch gekennzeichnet, dass** das Formwerkzeug (6) eine gegossen Oberfläche (7) aufweist.

9. Formwerkzeug nach Anspruch 7 oder 8, **dadurch gekennzeichnet, dass** der UHPC (3) mit Verstärkungsfasern verstärkt ist.

10. Formwerkzeug nach Anspruch 9, **dadurch gekennzeichnet, dass** der UHPC (3) mit metallischen Verstärkungsfasern oder Glasfasern verstärkt ist.

11. Formwerkzeug nach einem der Ansprüche 7 bis 10, **dadurch gekennzeichnet, dass** der UHPC (3) gasdicht ist.

12. Formwerkzeug nach einem der Ansprüche 7 bis 11, **dadurch gekennzeichnet, dass** der UHPC (3) gegenüber einem Temperaturwechsel auf eine Aushärtetemperatur für die Bauteile dauerhaft thermisch stabil ist.
